# EUROPEAN PATENT APPLICATION

(11) **EP 4 020 694 A1**
(43) Date of publication of application: **29.06.2022**
(21) Application number: 20854342.1
(22) Date of filing: 11.08.2020
(51) Int. Cl.: H01M 50/409, B32B 27/36, C09D 169/00

(54) **BATTERY SEPARATOR, NONAQUEOUS ELECTROLYTE BATTERY, ELECTRICAL DEVICE, AND COATING AGENT**

(30) Priority: 20.08.2019 JP 2019150565
(71) Applicant: Sumitomo Seika Chemicals Co., Ltd., Kako-gun, Hyogo 675-0145 (JP)
(72) Inventor: HASHIMOTO Shun, Kako-gun, Hyogo 675-0145 (JP); MORISHITA Masanori, Yonezawa-shi, Yamagata 992-8510 (JP); SAKAI Tetsuo, Yonezawa-shi, Yamagata 992-8510 (JP)
(74) Representative: Wächter, Jochen
(86) International application number: PCT/JP2020/030539
(87) International publication number: WO 2021/033589

(57) **Abstract**

A battery separator 100 of one aspect of the present invention includes a sheet-shaped or film-shaped porous substrate 20 and an aliphatic polycarbonate containing layer 10 covering one surface or both surfaces of the substrate 20. According to this battery separator, since the aliphatic polycarbonate containing layer 10 covering one surface or both surfaces of the substrate 20 is provided, it is possible to reliably prevent or suppress deterioration of battery characteristics due to at least overdischarge. In addition, since the substrate 20 constitutes the battery separator 100 together with the aliphatic polycarbonate containing layer 10, the mechanical strength as a battery separator can be improved.

## Description

### TECHNICAL FIELD

The present invention relates to a battery separator, a nonaqueous electrolyte battery, an electrical device, and a coating material.

### BACKGROUND ART

For nonaqueous electrolyte batteries represented by lithium ion secondary batteries, it has been conventionally required to solve a technical problem that battery characteristics are deteriorated due to occurrence of electrode damage or heat generation of the battery due to overdischarge.

One of countermeasures against the overdischarge is to incorporate a protection circuit that prevents overdischarge by automatically stopping discharge when a voltage at the time of discharge reaches a prescribed voltage, into a secondary battery. The protection circuit plays an important role of preventing overdischarge, but as a result of secondary batteries being widely used in daily life and commodification, further reduction in the manufacturing cost of secondary batteries is strongly required together with price reduction of devices using secondary batteries. In particular, since the price of the protection circuit accounts for a relatively large proportion of the price of the secondary battery, it is required to realize a low price of the protection circuit or a secondary battery having no protection circuit.

However, for example, in a lithium ion secondary battery, it is exceedingly difficult to reliably prevent overdischarge without having a protection circuit. One representative example of the difficulty is that self-discharge progresses when the lithium ion secondary battery is stored for a long period of time. Another representative difficulty is that, especially when overdischarge is performed to a battery voltage of around 0 V, the negative electrode reaches the dissolution potential of copper as a current collector, so that copper is eluted into the electrolyte solution. The copper eluted is deposited on the surface of the negative electrode during charging to increase the possibility that the battery is short-circuited. Also in the positive electrode, when cobalt (Co) or manganese (Mn) dissolved from a positive electrode active material such as lithium cobaltate (LiCoO₂) or lithium manganate (LiMn₂O₄) is deposited on the surface of the negative electrode during charging, the battery will be short-circuited.

Patent Document 1 proposes that battery characteristics due to overdischarge are improved by using a positive electrode active material prepared by mixing LiCoO₂ as a positive electrode primary active material having a potential more "noble" than the oxidation-reduction potential of copper as a current collector with LixMoO₃ (where 0 < x < 2) or the like as a positive electrode auxiliary active material having a potential more "base" than the oxidation-reduction potential of copper as a current collector.

On the other hand, as a means for preventing or alleviating deterioration of battery characteristics due to overdischarge by a constituent member of a secondary battery other than a positive electrode or a negative electrode, Patent Document 2 discloses a nonaqueous secondary battery that is composed of a porous film made of an organic polymer, which includes a network-like support, and swells in an electrolyte solution and retains the electrolyte solution, wherein the nonaqueous secondary battery prevents overcharge owing to being designed to satisfy a specific relation between the amount of the effective active material in the battery system and the overcharge-preventing function value of the battery separator.

### PRIOR ART DOCUMENTS

### PATENT DOCUMENTS

Patent Document 1: Japanese Patent Laid-open Publication No. 2-265167
Patent Document 2: WO 2004/019433 A

### SUMMARY OF THE INVENTION

### PROBLEMS TO BE SOLVED BY THE INVENTION

However, even if the technique disclosed in Patent Document 1 is adopted, improvement in battery characteristics due to overdischarge is not sufficient. Specifically, when the technique disclosed in Patent Document 1 is used, cobalt (Co), molybdenum (Mo), and the like are dissolved from the positive electrode active material in an overdischarge state, so that metal may be deposited on the surface of the negative electrode during charging. As a result, deterioration of battery characteristics due to overdischarge cannot be reliably prevented.

In addition, since the technique of Patent Document 2 focuses on a specific relational expression between the amount of the effective active material in the battery system and the overcharge-preventing function value of the battery separator, it is not intended to overcome deterioration of battery characteristics due to overdischarge by the battery separator itself.

Therefore, research and development of a battery separator (hereinafter, it is also referred to as a "separator" for short) that can reliably suppress or prevent deterioration of battery characteristics due to overdischarge, which is a typical cause of deterioration of battery characteristics, and a nonaqueous electrolyte battery comprising the separator are still halfway through.

### SOLUTIONS TO THE PROBLEMS

The present invention can greatly contribute to reliable suppression or prevention of deterioration of battery characteristics especially due to overdischarge in a secondary battery (typically, a nonaqueous electrolyte battery), and consequently deterioration of the battery.

As a result of many trials and errors, the present inventors have found that it is possible to reliably prevent or suppress, for example, deterioration of battery characteristics due to overdischarge by adopting a quite simple structure in which a porous substrate which is a substrate of a known separator is utilized and a specific resin layer covering one surface or both surfaces of the substrate is formed. The present invention has been devised based on the above findings.

The battery separator that is one of the aspects of the present invention comprises a sheet-shaped or film-shaped porous substrate and an aliphatic polycarbonate containing layer covering one surface or both surfaces of the substrate.

Since this battery separator has the aliphatic polycarbonate containing layer covering one surface or both surfaces of the substrate described above, it is possible to reliably prevent or suppress deterioration of battery characteristics due to at least overdischarge. In addition, since the substrate constitutes a battery separator together with the aliphatic polycarbonate containing layer, the mechanical strength as a battery separator can be improved.

A nonaqueous electrolyte battery comprising a positive electrode, a negative electrode, an electrolyte located between the positive electrode and the negative electrode, and the above-described battery separator is a nonaqueous electrolyte battery capable of reliably preventing or suppressing deterioration of battery characteristics due to at least overdischarge. In addition, an electrical device comprising the nonaqueous electrolyte battery can be a reliable electrical device because deterioration of battery characteristics due to at least overdischarge can be reliably prevented.

In addition, the coating material that is one of the aspects of the present invention comprises an aliphatic polycarbonate. In addition, the coating material is a material for covering one surface or both surfaces of a battery separator comprising a sheet-shaped or film-shaped porous substrate.

Since this coating material comprises an aliphatic polycarbonate for covering one surface or both surfaces of the substrate described above, a battery adopting the coating material can reliably prevent or suppress deterioration of battery characteristics due to at least overdischarge. In addition, since the coating material is a material for covering one surface or both surfaces of the substrate described above, it can improve the mechanical strength as a battery separator.

Incidentally, the use of the terms "sheet-shaped" and "film-shaped" in the present application is not limited by the thickness of the substrate. In the present application, a "sheet-shaped" substrate can also be a "film-shaped" substrate. Conversely, the "film-shaped" substrate in the present application may be a "sheet-shaped" substrate. In addition, the "layer" in the present application is a concept including not only a layer but also a film. The "film" in the present application is a concept including not only a film but also a layer.

In addition, "molecular weight" in the present application means "mass average molecular weight" unless otherwise specified.

### EFFECTS OF THE INVENTION

With the battery separator that is one of the aspects of the present invention, it is possible to reliably prevent or suppress deterioration of battery characteristics due to at least overdischarge. In addition, since the substrate constitutes a battery separator together with the aliphatic polycarbonate containing layer, the mechanical strength as a battery separator can be improved.

In addition, with the coating material that is one of the aspects of the present invention, a battery adopting the coating material can reliably prevent or suppress deterioration of battery characteristics due to at least overdischarge. In addition, since the coating material is a material for covering one surface or both surfaces of the substrate described above, it can improve the mechanical strength as a battery separator.

### BRIEF DESCRIPTION OF THE DRAWINGS

Fig. 1 is a schematic sectional view illustrating a battery separator according to the first embodiment.
Fig. 2 is a schematic configuration diagram of a lithium ion secondary battery as one example of a nonaqueous electrolyte battery of the second embodiment.
Fig. 3 is a graph indicating one example of the cycle characteristics of the lithium ion secondary batteries of Examples (1 to 3) and Comparative Examples (1 and 2).
Fig. 4 is a schematic sectional view illustrating a battery separator of a modification example of the first embodiment.
Fig. 5 is a schematic diagram illustrating one example of an electrical device according to the second embodiment.
Fig. 6 is a schematic diagram illustrating one example of an electrical device according to the second embodiment.

### DESCRIPTION OF REFERENCE SIGNS

- 10:: Aliphatic polycarbonate containing layer
- 20:: Substrate
- 100, 200:: Battery separator
- 900:: Nonaqueous electrolyte battery
- 900A:: Tablet PC
- 900B:: Air conditioner
- 910:: Aluminum outer covering (container)
- 912:: Negative electrode
- 914:: Negative electrode material
- 916:: Positive electrode
- 918:: Positive electrode material
- 930:: Electrolyte
- 940:: Power source
- 950:: Resistance

### EMBODIMENTS OF THE INVENTION

A battery separator, a nonaqueous electrolyte battery, an electrical device, and a coating material according to each embodiment of the present invention will now be described in detail with reference to the accompanying drawings. In this description, common parts are denoted by common reference signs in all the drawings unless otherwise specified. Furthermore, components according to each embodiment are not necessarily illustrated in accordance with relative scaling in the drawings. Moreover, some of the reference signs may not be indicated for the purpose of easier recognition of the respective drawings.

### < FIRST EMBODIMENT >

### [Battery separator of the present embodiment and method for fabricating the same]

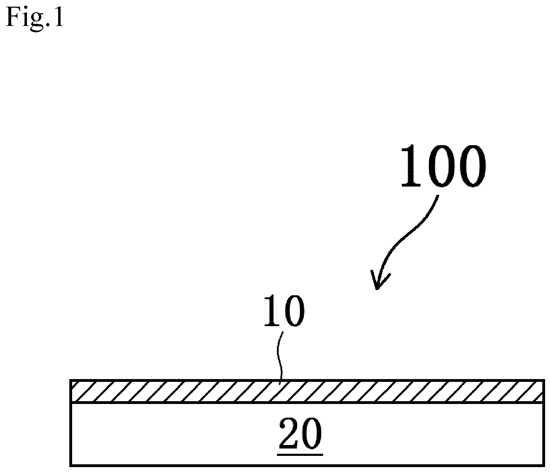

Fig. 1 is a schematic sectional view illustrating a battery separator 100 of the present embodiment. As shown in Fig. 1, the battery separator 100 of the present embodiment comprises a sheet-shaped or film-shaped porous substrate 20 and an aliphatic polycarbonate containing layer 10 covering one surface of the substrate 20. The aliphatic polycarbonate containing layer of the present embodiment comprises an aliphatic polycarbonate containing solution or a gel-state aliphatic polycarbonate containing material produced when a part of the solution is evaporated in the solution. The aliphatic polycarbonate containing layer serves as a coating material that covers a part or the entire of the substrate (typically, the substrate 20 in Fig. 1) in the battery separator of the present embodiment described later.

### (Aliphatic polycarbonate containing solution and method for producing the same)

The aliphatic polycarbonate containing solution of the present embodiment (possibly including inevitable impurities; hereinafter, the same applies) is a material for producing the aliphatic polycarbonate containing layer (possibly including inevitable impurities; hereinafter, the same applies). In the following, the aliphatic polycarbonate containing solution of the present embodiment and the aliphatic polycarbonate containing layer of the present embodiment will be described.

Representative examples of the aliphatic polycarbonate of the present embodiment are aliphatic polycarbonates listed as the following (a) to (c). Any aliphatic polycarbonate with which any of the effects of the battery separator, the nonaqueous electrolyte battery, the electrical device, and the coating material of the present embodiment can be exhibited can be adopted even if it is an aliphatic polycarbonates other than the aliphatic polycarbonates listed as the following (a) to (c). Therefore, for example, mixing, in addition to the raw materials listed as the following (a) to (c), other compounds and/or substances is one of the adoptable modification examples.
(a) Aliphatic polycarbonate prepared by copolymerizing carbon dioxide and an epoxide
(b) Aliphatic polycarbonate prepared by mixing an aliphatic diol with a carbonic acid ester or phosgene and then polycondensing the mixture
(c) Aliphatic polycarbonate prepared by ring-opening polymerization of a cyclic carbonate

Among the above, from the viewpoint of more reliably obtaining a high molecular weight aliphatic polycarbonate, it is a preferred embodiment to adopt an aliphatic polycarbonate obtained by copolymerizing carbon dioxide and an epoxide represented by Chemical Formula I.

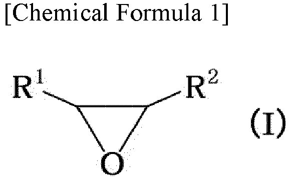

In Chemical Formula I above, R¹ and R² may be the same or different. R¹ and R² are each a hydrogen atom, a substituted or unsubstituted alkyl group having 1 or more and 10 or less carbon atoms, or a substituted or unsubstituted aryl group having 6 ore more and 20 or less carbon atoms. A case where R¹ and R² are bonded together to form a substituted or unsubstituted aliphatic ring having a number of ring members of 3 or more and 10 or less is also an example of the present embodiment.

In addition, in Chemical Formula I above, the number of the carbon atoms of the alkyl group represented by R¹ or R² is 1 or more and 10 or less. From the viewpoint of handling an aliphatic polycarbonate to be obtained, the number of the carbon atoms is more preferably 1 or more and 4 or less.

From the viewpoint of solubility in a solvent, a preferable example of the alkyl group is a linear or branched, substituted or unsubstituted alkyl group. More specifically, preferable examples of the alkyl group include a methyl group, an ethyl group, a n-propyl group, an isopropyl group, a n-butyl group, a sec-butyl group, a tert-butyl group, a n-pentyl group, a n-hexyl group, a n-heptyl group, a n-octyl group, a n-nonyl group, and/or a n-decyl group. In one preferred embodiment, as the alkyl group, an alkyl group substituted with one or more substituents selected from the group including an alkoxy group, an ester group, a silyl group, a sulfanyl group, a cyano group, a nitro group, a sulfo group, a formyl group, an aryl group, and a halogen atom can also be adopted.

In addition, in Chemical Formula I above, the number of the carbon atoms of the aryl group represented by R¹ or R² is 6 or more and 20 or less. From the viewpoint of achieving high reactivity, the number of the carbon atoms is more preferably 6 or more and 14 or less.

From the viewpoint of achieving high reactivity, preferable examples of the aryl group include a phenyl group, an indenyl group, a naphthyl group, and a tetrahydronaphthyl group. In a preferred adoptable embodiment, the aryl group may be an aryl group substituted with one substituent or two or more substituents selected from the group including an alkyl group (methyl group, ethyl group, n-propyl group, isopropyl group, n-butyl group, sec-butyl group, tert-butyl group, etc.), another aryl group (phenyl group, naphthyl group, etc.), an alkoxy group, an ester group, a silyl group, a sulfanyl group, a cyano group, a nitro group, a sulfo group, a formyl group, and a halogen atom.

Examples of the epoxide in Chemical Formula I above include one or two or more selected from the group including ethylene oxide, propylene oxide, 1,2-butylene oxide, 2,3-butylene oxide, isobutylene oxide, 1-pentene oxide, 2-pentene oxide, 1-hexene oxide, 1-octene oxide, 1-dodecene oxide, cyclopentene oxide, cyclohexene oxide, styrene oxide, vinylcyclohexane oxide, 3-phenylpropylene oxide, 3,3,3-trifluoropropylene oxide, 3-naphthylpropylene oxide, 2-phenoxypropylene oxide, 3-naphthoxypropylene oxide, butadiene monooxide, 3-vinyloxypropylene oxide, and 3-trimethylsilyloxypropylene oxide.

From the viewpoint of achieving more reliable reactivity, it is a preferred embodiment to adopt ethylene oxide, propylene oxide, 1,2-butylene oxide, and/or cyclohexene oxide among the above-mentioned epoxides. From the aforementioned point of view, more preferable examples are ethylene oxide and/or propylene oxide. As described above, the epoxide is not limited to be used singly, and two or more thereof may be used in combination.

The above-mentioned polymerization reaction between the epoxide and carbon dioxide is preferably conducted in the presence of a metal catalyst. Examples of the metal catalyst include a zinc-based catalyst, an aluminum-based catalyst, a chromium-based catalyst, and/or a cobalt-based catalyst. Among the examples mentioned above, it is a preferred embodiment to adopt a zinc-based catalyst or a cobalt-based catalyst from the viewpoint of achieving more reliable activity in the polymerization reaction between the epoxide and carbon dioxide. On the other hand, from the viewpoint of more reliably obtaining a high molecular weight aliphatic polycarbonate, it is a preferred embodiment to adopt a zinc-based catalyst among the above-mentioned examples.

Examples of the above-mentioned zinc-based catalyst include the following (1 -1) to (1 -2), but examples of the zinc-based catalyst of the present embodiment are not limited thereto.
(1 -1) One organozinc catalyst or two or more organozinc catalysts selected from the group including zinc acetate, diethyl zinc, and dibutyl zinc
(1 -2) An organozinc catalyst obtained by reacting one compound or two or more compounds selected from the group including a primary amine, a dihydric phenol, an aromatic dicarboxylic acid, an aromatic hydroxy acid, an aliphatic dicarboxylic acid, and an aliphatic monocarboxylic acid with a zinc compound

Among the organozinc catalysts described above, an organozinc catalyst obtained by reacting a zinc compound, an aliphatic dicarboxylic acid, and an aliphatic monocarboxylic acid is preferably adopted from the viewpoint of achieving more reliable polymerization activity. From the aforementioned point of view, a further preferable example is an organozinc catalyst obtained by reacting zinc oxide, glutaric acid, and acetic acid.

From the viewpoint of more reliably promoting the progress of the polymerization reaction, a preferable amount of the metal catalyst used for the polymerization reaction per mole of the epoxide is 0.001 mol or more, and a more preferable amount of use is 0.005 mol or more. From the viewpoint of realizing the quantitatively efficient use of the metal catalyst, a preferable amount of the metal catalyst used is 0.2 mol or less, and a more preferable amount of use is 0.1 mol or less.

In the polymerization reaction described above, a reaction solvent nay be used, as necessary. Examples of the reaction solvent are various organic solvents.

Representative examples of the organic solvent described above include the following (2-1) to (2-7), but examples of the organic solvent of the present embodiment are not limited thereto.
(2-1) One aliphatic hydrocarbon-based solvent or two or more aliphatic hydrocarbon-based solvents selected from the group including pentane, hexane, cyclohexane, etc.
(2-2) One aromatic hydrocarbon-based solvent or two or more aromatic hydrocarbon-based solvents selected from the group including benzene, toluene, and xylene
(2-3) One halogenated hydrocarbon-based solvent or two or more halogenated hydrocarbon-based solvents selected from the group including methylene chloride, chloroform, carbon tetrachloride, 1,1-dichloroethane, 1,2-dichloroethane, trichloroethane, 1-chloropropane, 2-chloropropane, chlorobenzene, and bromobenzene
(2-4) One ether-based solvent or two or more ether-based solvents selected from the group including dimethoxyethane, tetrahydrofuran, 2-methyltetrahydrofuran, 1,4-dioxane, and 1,3-dioxolane
(2-5) One ester-based solvent or two or more ester-based solvents selected from the group including ethyl acetate, n-propyl acetate, and isopropyl acetate
(2-6) One amide-based solvent or two or more amide-based solvents selected from the group including N,N-dimethylformamide and N,N-dimethylacetamide
(2-7) One carbonate-based solvent or two or more carbonate-based solvents selected from the group including dimethyl carbonate, ethyl methyl carbonate, diethyl carbonate, and propylene carbonate

From the viewpoint of more reliably making the reaction proceed smoothly, a preferable amount of the reaction solvent used for 100 parts by mass of the epoxide is 100 parts by mass or more and 10,000 parts by mass or less.

As the method of polymerizing an epoxide with carbon dioxide in the presence of a metal catalyst, for example, a method in which an epoxide, a catalyst, a reaction solvent, etc. are charged into an autoclave, mixed, and made to react by injecting carbon dioxide is one adoptable embodiment.

The amount of carbon dioxide used in the polymerization reaction described above per mole of the epoxide is preferably 0.5 mol or more and 10 mol or less, more preferably 0.6 mol or more and 5 mol or less, and further preferably 0.7 mol or more and 3 mol or less.

The pressure under which the carbon dioxide is used is not particularly limited. From the viewpoint of more reliably making the reaction proceed smoothly, the pressure under which the carbon dioxide is used in the polymerization reaction is preferably 0.1 MPa or more, more preferably 0.2 MPa or more, and further preferably 0.5 MPa or more. On the other hand, from the viewpoint of achieving pressure-efficient use of carbon dioxide, the use pressure of carbon dioxide is preferably 20 MPa or less, more preferably 10 MPa or less, and further preferably 5 MPa or less.

The polymerization reaction temperature in the above polymerization reaction is not particularly limited. From the viewpoint of more reliably shortening the reaction time, a preferable polymerization reaction temperature is 0°C or more, more preferably 20°C or more, and further preferably 30°C or more. On the other hand, from the viewpoint of more reliably suppressing side reactions and improving the yield, the polymerization reaction temperature is preferably 100°C or less, more preferably 80°C or less, and further preferably 60°C or less.

The polymerization reaction time can be appropriately chosen depending on polymerization reaction conditions. A preferable polymerization reaction time that can be usually adopted is 1 hour or more and about 40 hours or less.

The mass average molecular weight of a representative aliphatic polycarbonate of the present embodiment obtained by the above-described production method is preferably 5,000 or more, more preferably 10,000 or more, and further preferably 100,000 or more from the viewpoint of more reliably enhancing the ease of handling. From the viewpoint of the ease of handling and/or mechanical strength, the mass average molecular weight is preferably 2,000,000 or less, more preferably 1,000,000 or less, and further preferably 500,000 or less.

The "mechanical strength" described above includes two types of strengths. One of the "mechanical strengths" is tensile strength. Specifically, it is a strength (tensile strength) resisting a tension applied to a battery separator when the separator is prepared and a battery is assembled using the separator. The other "mechanical strength" is strength called puncture strength. Specifically, it is a strength (puncture strength) against a penetration force when penetrating the separator due to generation of a Li dendrite formed on the surface of the negative electrode during charging and discharging. In the present embodiment, it is possible to obtain a battery separator 100 superior in at least one of tensile strength and puncture strength.

Incidentally, it is preferable that the aliphatic polycarbonate of the present embodiment is at least one selected from the group consisting of polyethylene carbonate (PEC), polypropylene carbonate (PPC), and polybutylene carbonate (PBC) from the viewpoint of the ease of the production of a battery separator.

### (Substrate of the present embodiment)

Fig. 1 is a schematic sectional view illustrating a battery separator 100 of the present embodiment. The substrate 20 included in the battery separator 100 of the present embodiment is formed of, for example, a material having resistance to an electrolyte solution of a nonaqueous electrolyte battery.

Specifically, the material constituting the substrate 20 comprises the following (3-1) to (3-3).
(3-1) Porous sheet-shaped member or porous film-shaped member made of one polymer material or two or more polymer materials selected from the group including polyethylene (PE), polypropylene (PP), polyamide (PA), polyamideimide (PAI), polyimide (PI), polyethylene terephthalate (PET), ethylene-propylene copolymer (PE/PP), and fluororesin.
(3-2) Porous sheet-shaped member or porous film-shaped member made of one inorganic material or two or more inorganic materials selected from the group including cellulose, ceramic, and glass (including glass fiber)
(3-3) Porous sheet-shaped member or porous film-shaped member comprising the material shown in (3-1) above and the material shown in (3-2) above

Representative examples of the substrate 20 included in the battery separator 100 of the present embodiment shown in (3-3) above include a nonwoven fabric made of a porous aramid substrate (manufactured by Japan Vilene Co., Ltd.), a PET nonwoven fabric (substrate) coated with an inorganic oxide "NanoBase (registered trademark) X" (manufactured by Mitsubishi Paper Mills Ltd.), a polyethylene substrate coated with a meta-aramid "LIELSORT (registered trademark)" (manufactured by Teijin Ltd.), or a substrate in which a polyolefin substrate and an aramid heat-resistant layer are combined "PERVIO (registered trademark)" (manufactured by Sumitomo Chemical Co., Ltd.).

Here, from the viewpoint of efficiently removing moisture and solvents, it is a preferred embodiment to adopt a polymer (resin) having a melting point or a glass transition temperature of 140°C or more. From the viewpoint of efficiently removing moisture and a solvent and suppressing deformation of the substrate, the melting point or glass transition temperature is more preferably more than 140°C, further preferably 145°C or more, and very preferably 150°C or more.

As already described, the substrate 20 of the present embodiment is a porous substrate. The porosity of the substrate 20 is not particularly limited. From the viewpoint of ion permeability and the fillability of the aliphatic polycarbonate, the porosity of the substrate 20 is preferably 20% or more and 80% or less, and more preferably 40% or more and 70% or less.

As already described, the substrate 20 included in the battery separator 100 of the present embodiment is a sheet-shaped or film-shaped porous substrate. Examples of the material of a sheet-shaped or film-shaped substrate capable of realizing more preferable porosity for exerting the effects of the present embodiment include polyethylene (PE), polypropylene (PP), or a composite material in which ceramic and a binder are bonded. Even when a material which is not positively adopted as a material to constitute a battery separator due to its weak mechanical strength, such as cellulose, is adopted as the substrate 20, the coating material of the present embodiment covers one surface of the substrate 20, so that the mechanical strength as a battery separator can be increased to an extent as high as it can withstand practical use.

### (Method for manufacturing battery separator 100)

Next, a method for manufacturing the battery separator 100 of the present embodiment will be described.

In the present embodiment, the battery separator 100 having any shape or size can be manufactured by adopting various known methods. Typically, is performed a step of covering one surface of a sheet-shaped or film-shaped substrate 20 having a desired size and shape by an application method typified by a spin coating method, a screen printing method, a spray coating method, a bar coating method, or a gravure coating method using an aliphatic polycarbonate containing solution as the coating material of the present embodiment (application step). The application method may be appropriately selected in consideration of the thickness of the aliphatic polycarbonate containing layer 10 finally obtained and/or the ease of handling of the aliphatic polycarbonate containing solution.

In the application step of the present embodiment, the solvent of the aliphatic polycarbonate containing solution is preferably a solvent that dissolves the aliphatic polycarbonate but does not dissolve or hardly dissolves the substrate 20. An example of the solvent of the aliphatic polycarbonate containing solution is one selected from the group including acetonitrile, dimethylformamide, NMP (N-methylpyrrolidone), tetrahydrofuran, dimethyl carbonate, diethyl carbonate, 1,2-dichloroethane, halogen-based solvents typified by chlorobenzene, 1,4-dioxane, and 1,3-dioxolane.

In addition, the method for preparing the aliphatic polycarbonate containing solution is not limited as long as it can afford solution characteristics (including dispersibility) suitable for the application step of the present embodiment. An example of the method for conditioning the aliphatic polycarbonate containing solution is one method by mechanical stirring selected from the group including a ball mill method, a bead mill method, a homogenizer method, a high-speed impact mill method, an ultrasonic dispersion method, and an agitating blade method.

Thereafter, the solvent is removed from the aliphatic polycarbonate containing solution covering the substrate 20 (drying step). The means for removing the solvent is not limited as long as the effect of the finally formed battery separator 100 of the present embodiment is not substantially impaired. Examples of the means for removing the solvent are known drying methods, heating methods, or methods by solvent replacement.

Through the above-described steps, the battery separator 100 of the present embodiment comprising the sheet-shaped or film-shaped porous substrate 20 and the aliphatic polycarbonate containing layer 10 covering one surface of the substrate 20 can be manufactured.

Incidentally, the thickness of the battery separator 100 of the present embodiment is not limited as long as the performance of a nonaqueous electrolyte battery described later is not substantially impaired. From the viewpoint of further controlling the internal short circuit of the battery, the thickness of the battery separator 100 is 2 µm or more and 100 µm or less, and more preferably 5 µm or more and 30 µm or less. In the present embodiment, the thickness of the battery separator 100 is measured using a micrometer. For example, an average value of the thicknesses at arbitrary three points measured using a micrometer (model: MDC-75 MX/75 PX) manufactured by Mitutoyo Corporation is shown.

The thickness of the aliphatic polycarbonate containing layer 10 in the battery separator 100 is not limited as long as the performance of a nonaqueous electrolyte battery described later is not substantially impaired. From the viewpoint of ion permeability and the liquid retainability of the electrolyte solution in the separator, the thickness of the aliphatic polycarbonate containing layer 10 is 0.1 µm or more and 10 µm or less, and more preferably 1 µm or more and 5 µm or less. In the present embodiment, the thickness of the battery separator 100 is measured using a micrometer. For example, an average value of the thicknesses at arbitrary three points measured using a micrometer (model: MDC-75 MX/75 PX) manufactured by Mitutoyo Corporation is shown.

### < SECOND EMBODIMENT >

### [Nonaqueous electrolyte battery 900 of the present embodiment and method for manufacturing the same]

Next, a method for manufacturing a lithium ion secondary battery, which is a representative example of the nonaqueous electrolyte battery 900 of the present embodiment, will be described.

Since the lithium ion secondary battery contains lithium ions, the electrolytic salt is preferably a lithium salt. Examples of the lithium salt include one salt or two or more salts selected from the group including lithium hexafluorophosphate, lithium perchlorate, lithium tetrafluoroborate, lithium trifluoromethanesulfonate, and lithium imide trifluoromethanesulfonate. Therefore, as for the electrolyte, in addition to a case where only one electrolyte is used, a case where two or more electrolytes are used in combination is also one adoptable embodiment.

Examples of the electrolyte solution include one member or two or more members selected from the group including propylene carbonate, ethylene carbonate, dimethyl carbonate, diethyl carbonate, and γ-butyrolactone. Therefore, as for the electrolyte solution, in addition to a case where only one electrolyte solution is used, a case where two or more electrolytic solutions are used in combination is also one adoptable embodiment. From the viewpoint of liquid infiltratability into the substrate, it is a preferred embodiment to adopt propylene carbonate alone, a mixture of ethylene carbonate and diethyl carbonate, or γ-butyrolactone alone as the electrolyte solution. The mixing ratio of the above-described mixture of ethylene carbonate and diethyl carbonate may be arbitrarily adjusted within a range in which one component accounts for 10 to 90% by volume.

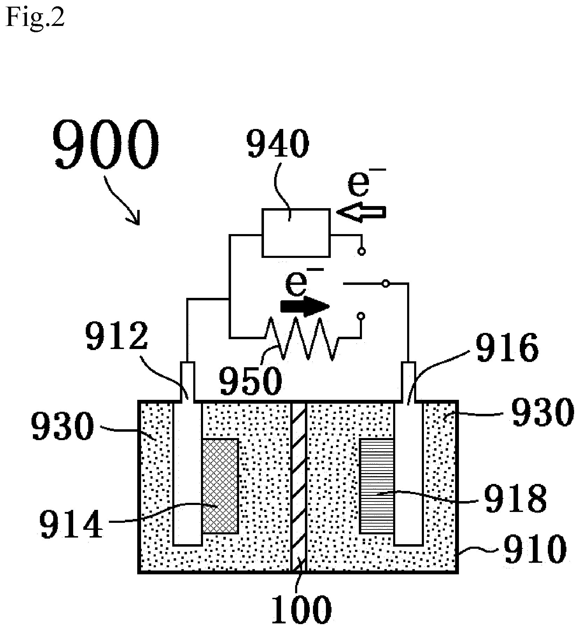

Fig. 2 is a schematic configuration diagram of a lithium ion secondary battery which is one example of the nonaqueous electrolyte battery 900 of the present embodiment.

As illustrated in Fig. 2, the nonaqueous electrolyte battery 900 of the present embodiment has the following configurations (4-1) to (4-5) in an aluminum outer covering (container) 910.
(4-1) Positive electrode material 918 constituting positive electrode, and positive electrode 916 electrically connected to the positive electrode material 918
(4-2) Negative electrode material 914 constituting negative electrode, and negative electrode 912 electrically connected to the negative electrode material 914
(4-3) Separator 100 of the first embodiment, which keeps the positive electrode and the negative electrode in a non-contact state, in other words, which electronically insulates the positive electrode and the negative electrode.
(4-4) Electrolyte 930 located between the positive electrode and the negative electrode
(4-5) External circuit comprising resistance 950 and power source 940 electrically connected to the negative electrode 912 and the positive electrode 916 in order to realize charging and discharging

In Fig. 2, the black arrow indicates the movement of electrons during discharging, and the white arrow indicates the movement of electrons during charging. The solvent of the electrolyte solution of the present embodiment is a mixed solvent of ethylene carbonate and diethyl carbonate (ethylene carbonate/diethyl carbonate = 50/50 (volume ratio)). The electrolyte of the electrolyte solution is LiPF₆ having a concentration of 1 M.

### (Manufacture of positive electrode)

One example of the positive electrode of the nonaqueous electrolyte battery 900 of the present embodiment can be manufactured through the following steps (a1) to (a2).
(a1) A mixture slurry for a positive electrode is prepared by mixing 92 parts of LiNi_{0.8}Co_{0.15}Al_{0.05}O₂ as a positive electrode active material for constituting the positive electrode material 918, 4 parts, in terms of solid content, of PVDF (polyvinylidene fluoride, manufactured by Solvay Specialty Polymers Japan K.K., trade name: 5130) as a binder, 4 parts of acetylene black, and 20 parts of N-methylpyrrolidone are mixed with a planetary mixer.
(a2) The mixture slurry for a positive electrode is applied to one surface of a stainless steel foil having a thickness of 10 µm, dried at 150°C for 12 hours, and then roll-pressed.

Through the above-described steps, a positive electrode having an electrode active material layer having an overall thickness of 70 µm is obtained.

### (Manufacture of negative electrode)

One example of the negative electrode of the nonaqueous electrolyte battery 900 of the present embodiment can be manufactured through the following steps (b1) to (b2).
(b1) A mixture slurry for a negative electrode is prepared by mixing 85 parts of graphite as a negative electrode active material for constituting the negative electrode material 914, 10 parts of SiO, 4.5 parts, in terms of solid content, of sodium polyacrylate as a binder, 0.5 parts of SBR (styrene-butadiene rubber), and water as a solvent with a planetary mixer.
(b2) The mixture slurry for a negative electrode is applied to one surface of a nickel-plated steel foil having a thickness of 10 µm, dried at 150°C for 12 hours, and then roll-pressed.

Through the above-described steps, a negative electrode having an electrode active material layer having an overall thickness of 60 µm is obtained.

Thereafter, the positive electrode and the negative electrode are housed in an aluminum outer covering (container) 910 with the electrodes facing each other with an intervention of the battery separator 100 of the first embodiment, and the opening of the aluminum outer covering is sealed by heating at 150°C. As described above, a laminated-cell-type lithium ion battery, which is one example of the nonaqueous electrolyte battery 900 of the present embodiment, is manufactured.

Incidentally, the nonaqueous electrolyte battery of the present embodiment is not limited to the nonaqueous electrolyte battery 900 described above. A person skilled in the art can understand that any nonaqueous electrolyte battery adopting the separator 100 of the first embodiment that keeps the positive electrode and the negative electrode in a non-contact state can be applied to a nonaqueous electrolyte battery having a known structure different from the nonaqueous electrolyte battery 900 described above.

As described above, the nonaqueous electrolyte battery 900 of the present embodiment comprises the battery separator 100 in which the aliphatic polycarbonate containing layer is formed on a part of pores (voids) of the substrate 20 and the surface of the substrate 20. Therefore, for example, deterioration of battery characteristics due to overdischarge can be reliably prevented or suppressed. More specifically, even in an overdischarge state in which the battery voltage of the nonaqueous electrolyte battery 900 is 0 V, for example, deposition of Cu, Ni, or the like on the surface of the negative electrode can be reliably prevented or suppressed, so that deterioration of the battery characteristics of the nonaqueous electrolyte battery 900 can be reliably prevented or delayed.

### < Electrical device to which nonaqueous electrolyte battery 900 is applied >

The electrical device of the present embodiment comprises at least the nonaqueous electrolyte battery 900. Therefore, since the electrical device of the present embodiment is an electrical device utilizing the nonaqueous electrolyte battery 900 as a power source, it has a wide variety of applications.

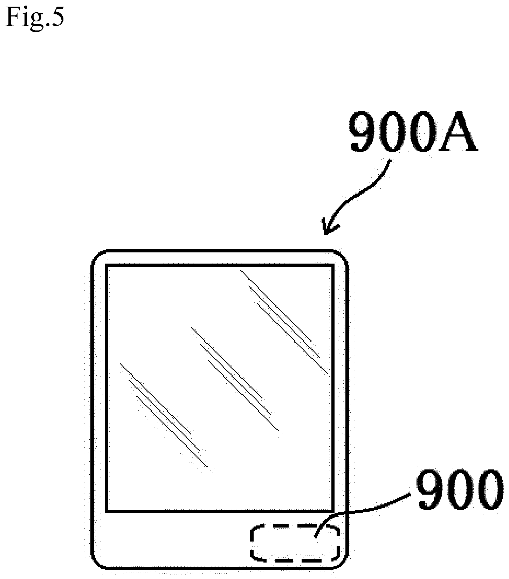

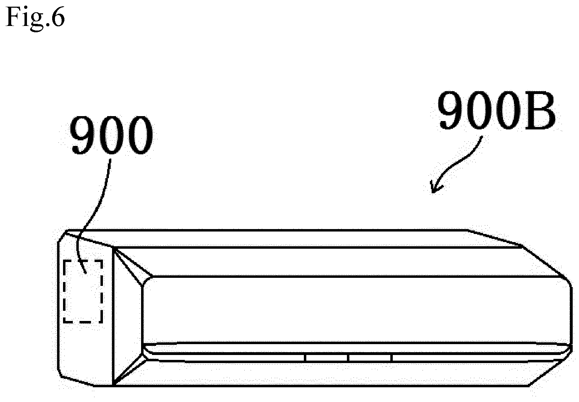

Examples of the electrical device in which the nonaqueous electrolyte battery 900 of the present embodiment is used as at least a part of a power source include personal computers including a tablet PC 900A provided with a nonaqueous electrolyte battery 900 depicted in Fig. 5, or an air conditioner 900B provided with a nonaqueous electrolyte battery 900 depicted in Fig. 6, as well as washing machines, televisions, refrigerators, smartphones, PC peripheral devices, music players, dry cells, game machines, shavers, vacuum cleaners, electronic dictionaries, watches, video cameras, motorcycles, toys, bicycles, automobiles, hybrid vehicles, plug-in hybrid vehicles, railways, ships, airplanes, emergency storage batteries, medical devices, etc. provided with a nonaqueous electrolyte battery 900.

### < EXAMPLES >

Hereinafter, each of the above-described embodiments will be described in more detail with reference to examples, but the above-described embodiments are not limited by these examples.

### [Example of catalyst production (Production of organozinc catalyst)]

In the present example, into a four-necked flask having a volume of 300 mL and equipped with a stirrer, a nitrogen gas introduction tube, a thermometer, and a reflux condenser were introduced 8.1 g (0.1 mol) of zinc oxide, 12.7 g (0.096 mol) of glutaric acid, 0.1 g (0.002 mol) of acetic acid, and 130 g of toluene. Next, the inside of the reaction system was replaced with a nitrogen atmosphere, the temperature was raised to 55°C, and then the mixture was reacted in the flask by stirring for 4 hours. Subsequently, the product produced by the reaction of the mixture was heated to 110°C, and then subjected to azeotropic dehydration by stirring for 4 hours to remove moisture. Thereafter, the mixture was cooled to room temperature to afford a reaction liquid containing an organozinc catalyst.

### [Synthesis Example 1 Production of [aliphatic polycarbonate A (polypropylene carbonate)]]

The inside of an autoclave having a volume of 1 L (liter) and equipped with a stirrer, a gas introduction tube, and a thermometer was replaced with a nitrogen atmosphere beforehand, and then 8.0 mL of the above-described reaction liquid containing the organozinc catalyst (containing 1.0 g of the organozinc catalyst), 131 g of hexane, and 46.5 g (0.8 mol) of propylene oxide were introduced. Next, the inside of the reaction system was replaced with a carbon dioxide atmosphere with stirring by adding carbon dioxide, and then carbon dioxide was charged until the inside of the reaction system reached 1.5 MPa. Subsequently, after the temperature was raised to 60°C, a polymerization reaction was performed for 6 hours while supplying carbon dioxide to be consumed by the reaction of the mixture. After the completion of the polymerization reaction, the autoclave was cooled to depressurize, and then filtration was performed. Thereafter, drying under reduced pressure was performed to afford 80.8 g of aliphatic polycarbonate A (polypropylene carbonate). The aliphatic polycarbonate A obtained had a mass average molecular weight of 350,000.

### [Synthesis Example 2 Production of [aliphatic polycarbonate B (polyethylene carbonate)]]

A polymerization reaction was performed in the same manner as in Synthesis Example 1 except that propylene oxide was replaced with 35.2 g (0.8 mol) of ethylene oxide. As a result, 68.4 g of aliphatic polycarbonate B (polyethylene carbonate) was obtained. The aliphatic polycarbonate B obtained had a mass average molecular weight of 188,000.

### [Synthesis Example 3 Production of [aliphatic polycarbonate C (polypropylene carbonate-polycyclohexene carbonate terpolymer)]]

A polymerization reaction was performed in the same manner as in Synthesis Example 1 described above except that 11.2 g (0.2 mol) of propylene oxide and 58.8 g (0.6 mol) of cyclohexene oxide were used. As a result, 67.7 g of aliphatic polycarbonate C (polypropylene carbonate-polycyclohexene carbonate terpolymer) was obtained. The aliphatic polycarbonate C obtained had a mass average molecular weight of 203,000. The ratio of polypropylene carbonate to polycyclohexene carbonate was 25:75 (molar ratio).

The mass average molecular weight of the aliphatic polycarbonates obtained in each of the above synthesis examples was measured by the following method.

### [Method for measuring mass average molecular weight]

An N,N-dimethylformamide solution having an aliphatic polycarbonate concentration of 0.2 mass% is prepared. Thereafter, the solution is analyzed using high performance liquid chromatography. By comparing a polystyrene having a known mass average molecular weight measured under the same conditions with the above-described measurement results, the mass average molecular weight of the aliphatic polycarbonate to be measured is calculated.

Here, the measurement conditions are as follows.
- Column: GPC column (Shodex OHPac SB -804, SB -805, which are trade name of Showa Denko K.K.)
- Column temperature: 40°C
- Eluent: 5 mmol/L LiBr-N,N-dimethylformamide solution
- Flow rate: 1.0 mL/min

### (1) Manufacture and evaluation of separator

### (Manufacture of separator)

### [Example 1]

Slurry 1 for application to a separator was obtained by mixing N-methylpyrrolidone with 100 parts by mass of aliphatic polycarbonate A such that a solid concentration of 5% by mass was obtained.

A nonwoven fabric (thickness: 17 µm, Gurley value: 20 s/100 cc, porosity: 55%) made of a porous aramid substrate was used as a substrate 20. Aliphatic polycarbonate A was applied using a doctor blade so as to cover one surface of the substrate 20. Thereafter, the aliphatic polycarbonate A was dried at 70°C for 3 minutes. As a result, a battery separator including an aliphatic polycarbonate A containing layer covering one surface of the substrate 20 was manufactured.

### [Example 2]

A battery separator of Example 2 including an aliphatic polycarbonate B containing layer covering one surface of the substrate 20 was manufactured in the same manner as in the battery separator of Example 1 except that the aliphatic polycarbonate A was replaced with the aliphatic polycarbonate B.

### [Example 3]

A battery separator of Example 3 was obtained by being manufactured in the same manner as the battery separator of Example 1 except that the aliphatic polycarbonate C was used and N-methylpyrrolidone was replaced with 1,4-dioxane.

### [Comparative Example 1]

The battery separator (thickness: 17 µm, Gurley value: 20 s/100 cc, porosity: 55%) made of a porous aramid substrate made of aramid described in Example 1 having no aliphatic polycarbonate applied was used as Comparative Example 1.

### [Comparative Example 2]

A battery separator of Comparative Example 2 was obtained by being manufactured in the same manner as the battery separator of Example 1 except that the aliphatic polycarbonate A was replaced with PVdF-HFP (manufactured by Arkema: KYNAR, trade name: FLEX 2851-00), which is a copolymer of vinylidene fluoride (VDF) and hexafluoropropylene (HFP).

### (Method for evaluating separator)

### [Evaluation of Gurley value]

The time (seconds) taken for 100 cc of air to pass through was measured according to JIS-P8117 Gurley tester method using a Gurley type densometer manufactured by YASUDA SEIKI SEISAKUSHO, LTD., thereby affording a Gurley value of each object to be measured (Example 1, Example 2, Example 3, Comparative Example 1, and Comparative Example 2). In Table 1 are shows the measurement results of the Gurley value.

**[Table 1]**

| | **Material covering one surface of substrate** | **Gurley value (sec/100 mL)** |
|---|---|---|
| **Example 1** | **Aliphatic polycarbonate A** | 44.7 |
| **Example 2** | **Aliphatic polycarbonate B** | 36.8 |
| **Example 3** | **Aliphatic polycarbonate C** | 37.7 |
| **Comparative Example 1** | **None** | 31.7 |
| **Comparative Example 2** | PVdD - HFP | 38.2 |

### [Evaluation of separator strength]

The strength of each separator to be measured (Example 1, Example 2, Example 3, Comparative Example 1, and Comparative Example 2) was measured by performing a tensile test using a tensile testing machine (Autograph, model: AGS-X) manufactured by Shimadzu Corporation. Specifically, a tensile test was performed under the condition specified by a grip interval of 110 mm and a tensile speed of 50 mm/min, and the maximum stress applied to each separator to be measured when the sample was broken was evaluated as the tensile strength of the separator. In Table 2 are shown the measurement results of the separator strength.

**[Table 2]**

| | **Tensile strength** (N) |
|---|---|
| **Example 1** | 11.7 |
| **Example 2** | 8.4 |
| **Example 3** | 8.9 |
| **Comparative Example 1** | 5.1 |
| **Comparative Example 2** | 5.5 |

### (Fabrication of positive electrode/separator/negative electrode)

The positive electrode formed into a rectangle of 5 cm × 3 cm described in the second embodiment, the negative electrode formed into a rectangle of 5.2 cm × 3.2 cm described in the second embodiment, and the separators of Example 1, Example 2, Example 3, Comparative Example 1, and Comparative Example 2 each formed into a rectangle of 5.6 × 3.6 cm were prepared. Thereafter, the positive electrode and the negative electrode were disposed to face each other with each separator interposed therebetween to fabricate a laminate composed of the positive electrode, the separator, and the negative electrode.

### (Overdischarge test)

As a preliminary test, in order to check a discharge capacity, a charging and discharging test (a charging and discharging cycle test) of 2.0 V (discharging) - 4.2 V (charging) was performed once at a current value of (1/10)C based on the theoretical capacity (45 mAh), and thereby the discharge capacity (mAh/g) of each object to be measured (Example 1, Example 2, Example 3, Comparative Example 1, and Comparative Example 2) before an overdischarge test was checked.

In this test, the battery was charged at a current value of (1/5)C until the voltage reached 4.2 V, and then discharged at a current value of (1/5)C until the voltage reached 2 V. Thereafter, the battery was discharged at a current value of (1/20)C until the voltage reached 0 V, and then left at an open circuit voltage for 1 hour.

Thereafter, an overdischarge test up to 0 V (discharge) - 4.2 V (charge) was repeated 10 times. Subsequently, charging to 4.2 V was performed, followed by discharging to 2.0 V, and the discharge capacity (mAh/g) of each object to be measured (Example 1, Example 2, Example 3, Comparative Example 1, and Comparative Example 2) after the overdischarge test was measured. Table 3 shows the measurement results of the discharge capacity before the overdischarge test (after the preliminary test) and the discharge capacity after the overdischarge test (after the test).

**[Table 3]**

| | **Discharge capacity before test (mAh/g)** | **Discharge capacity after test (mAh/g)** |
|---|---|---|
| **Example 1** | 198.8 | 197.3 |
| **Example 2** | 199.8 | 205.6 |
| **Example 3** | 199.1 | 201.2 |
| **Comparative Example 1** | 185.2 | 28.0 |
| **Comparative Example 2** | 189.3 | 170.7 |

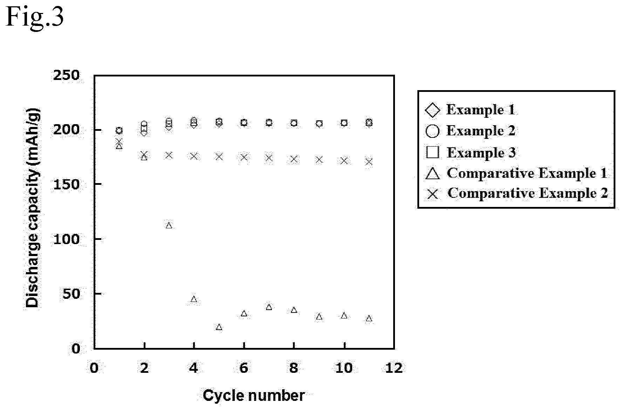

Fig. 3 shows the cycle characteristics of the laminated-cell-type lithium ion batteries of the respective objects to be measured (Example 1, Example 2, Example 3, Comparative Example 1, and Comparative Example 2) as examples of the nonaqueous electrolyte battery 900. The vertical axis represents the discharge capacity (mAh/g) up to 2V, and the horizontal axis represents the number of charging and discharging cycles.

As shown in Fig. 3, in both Comparative Example 1 and Comparative Example 2, it is confirmed that the discharge capacity after the overdischarge test is lower than that before the test as the number of charging and discharging cycles increases. This is presumed to be because in Comparative Example 1 and Comparative Example 2, an internal short circuit progresses due to overdischarge.

### < Other Embodiments >

Meanwhile, in the first embodiment, the battery separator 100 comprising the sheet-shaped or film-shaped porous substrate 20 and the aliphatic polycarbonate containing layer 10 covering one surface of the substrate 20 is adopted, but a battery separator comprising aliphatic polycarbonate containing layers 10 covering both surfaces of the substrate 20 can be adopted as a modification example of the first embodiment.

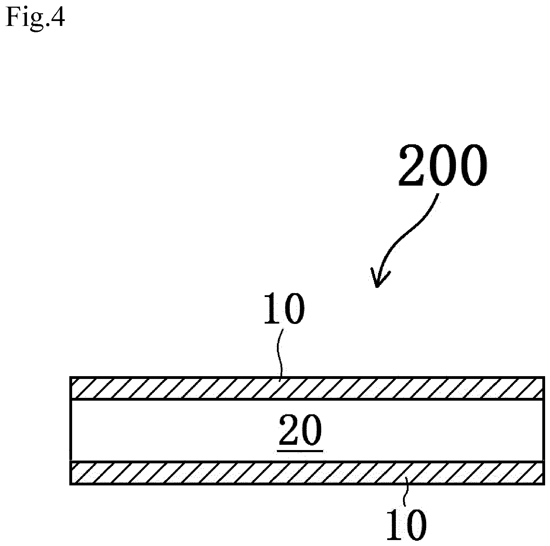

Fig. 4 is a schematic sectional view illustrating a battery separator 200 of a modification example of the first embodiment. The battery separator 200 of the present modification example comprises a sheet-shaped or film-shaped porous substrate 20 and aliphatic polycarbonate containing layers 10 covering both surfaces of the substrate 20. Except for the points described above, the configuration and manufacturing method of the battery separator 200 of this modification example are the same as those of the battery separator 100 of the first embodiment, and thus the description thereof is omitted.

According to the battery separator 200 of the present modification example, since a part of the holes (voids) of both surfaces of the substrate 20 covered with the aliphatic polycarbonate containing layers 10 is filled with the aliphatic polycarbonate containing layers 10, the reliability thereof is higher than that of the battery separator 100 of the first embodiment, and the mechanical strength as a battery separator can be improved. A nonaqueous electrolyte battery represented by a lithium ion battery using the battery separator 200 can more reliably prevent or suppress deterioration of battery characteristics at least due to overdischarge than the battery separator 100 of the first embodiment.

As described above, the above embodiments and modification examples have been disclosed not for limiting the present invention but for describing these embodiments and modification examples. Furthermore, modification examples made within the scope of the present invention, inclusive of other combinations of the embodiments and modification examples, will also be included in the scope of the patent claims.

### INDUSTRIAL APPLICABILITY

The present invention can be widely used as a coating material, a battery separator, a nonaqueous electrolyte battery comprising the battery separator, and/or an electrical device comprising the nonaqueous electrolyte battery in various industrial fields including an electric machine industry, an information industry, a music industry, a transportation industry, a medical industry, and a space industry.

## Claims

1. A battery separator comprising:
a sheet-shaped or film-shaped porous substrate; and
an aliphatic polycarbonate containing layer covering one surface or both surfaces of the substrate.

2. The battery separator according to claim 1, wherein the aliphatic polycarbonate containing layer comprises at least one member selected from the group consisting of polyethylene carbonate, polypropylene carbonate, and polybutylene carbonate.

3. The battery separator according to claim 1 or claim 2, wherein the substrate has a porosity of 20% or more and 80% or less.

4. The battery separator according to any one of claim 1 to claim 3, wherein the battery separator has a thickness of 2 µm or more and 100 µm or less.

5. A nonaqueous electrolyte battery comprising:
a positive electrode;
a negative electrode;
an electrolyte located between the positive electrode and the negative electrode; and
a battery separator according to any one of claim 1 to claim 4 that keeps the positive electrode and the negative electrode in a non-contact state.

6. An electrical device comprising a nonaqueous electrolyte battery according to claim 5.

7. A coating material comprising an aliphatic polycarbonate, which is used for covering one surface or both surfaces of a sheet-shaped or film-shaped porous substrate of a battery separator comprising the substrate.
